(19) Europäisches Patentamt

European Patent Office

Office européen des brevets

(11) Veröffentlichungsnummer: **0 286 910 B1**

(12) # EUROPÄISCHE PATENTSCHRIFT

(45) Veröffentlichungstag der Patentschrift: **18.03.92**

(21) Anmeldenummer: **88105137.9**

(22) Anmeldetag: **30.03.88**

(51) Int. Cl.⁵: **G08G 1/054**

(54) **Verkehrsüberwachungsvorrichtung.**

(30) Priorität: **11.04.87 DE 3712314**

(43) Veröffentlichungstag der Anmeldung:
**19.10.88 Patentblatt 88/42**

(45) Bekanntmachung des Hinweises auf die
Patenterteilung:
**18.03.92 Patentblatt 92/12**

(84) Benannte Vertragsstaaten:
**CH DE FR GB LI NL**

(56) Entgegenhaltungen:
**EP-A- 0 188 694**
**DE-A- 3 034 161**

(73) Patentinhaber: **Robot Foto & Electronic GmbH**
**& Co KG**
**Hildener Strasse 57**
**W-4000 Düsseldorf 13(Benrath)(DE)**

(72) Erfinder: **Knisch, Konrad**
**Rubensweg 10**
**W-4010 Hilden(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

## Technisches Gebiet

Die Erfindung betrifft eine Verkehrsüberwachungsvorrichtung zur photographischen Registrierung von Fahrzeugen, die eine vorgegebene Geschwindigkeit überschreiten, bei welcher die Geschwindigkeit der Fahrzeuge durch Doppler-Radar im wesentlichen gegen die Fahrtrichtung gemessen wird und die Fahrzeuge frontal photographiert werden, nach dem Oberbegriff des Patentanspruchs 1.

Wenn hier und im folgenden von "photographisch" gesprochen wird, so ist damit zwar in erster Linie die Erzeugung von Bildern durch photochemische Prozesse gemeint. Die Erfindung wäre aber auch anwendbar, wenn Bilder auf andere Weise, beispielsweise auf elektronischem oder thermischem Wege erzeugt würden. Der Ausdruck "photographisch" soll insbesondere in den Patentansprüchen auch diese Möglichkeit umfassen.

## Zugrundeliegender Stand der Technik

Es ist bekannt, die Geschwindigkeit von Fahrzeugen mittels Doppler- Radar zu messen. Wenn eine ausgesandte Radarwelle an einer bewegten Fläche reflektiert wird, dann verändert sich infolge des Dopplereffekts die Wellenlänge und damit die Frequenz der reflektierten Welle gegenüber der Wellenlänge bzw. Frequenz der ausgesandten Welle. Diese Frequenzänderung ist proportional der Geschwindigkeit der bewegten Fläche auf den Radarsender zu oder von dem Radarsender weg. Diese Erscheinung wird bei Verkehrsüberwachungsvorrichtungen benutzt, um Überschreitungen einer vorgeschriebenen Höchstgeschwindigkeit zu erfassen. Um beweiskräftige Unterlagen für eine Überschreitung der vorgeschriebenen Höchstgeschwindigkeit zu erhalten, ist es weiter bekannt, das Fahrzeug bei Feststellung einer solchen Überschreitung zu photographieren. Dabei wird vor allem auch das Fahrzeugkennzeichen aufgenommen.

Bei solchen Verkehrsüberwachungsvorrichtung sendet ein Radarsender einen divergierenden Radarstrahl unter einem kleinen Winkel zur Fahrbahnlängsrichtung aus. Durch diesen divergierenden Radarstrahl wird auf der Fahrbahn ein Meßabschnitt definiert, innerhalb dessen ein auf der Fahrbahn fahrendes Fahrzeug von dem Radarstrahl erfaßt wird. Aus den an dem Fahrzeug reflektierten Radarsignalen wird ein Meßwert für die Geschwindigkeit des Farhzeugs gebildet. Eine photographische Kamera erfaßt einen Öffnungswinkel, innerhalb dessen der Radarstrahl und der Meßabschnitt liegen. Die Kamera wird automatisch ausgelöst, wenn der besagte Meßwert für die Geschwindigkeit des Fahrzeuges einen vorgegebenen Schwellwert überschreitet. Es wird dann der Meßwert in die Aufnahme eingespiegelt oder sonstwie registriert (CH-B 480697, US-B-3522611). Es ist auch bekannt, im Bereich des Filmrandes eine Reihe oder eine Matrix von Leuchtdioden anzuordnen, die während des Filmtransports von einem Speicher, in dem der Meßwert für die Geschwindigkeit gespeichert ist, so ansteuerbar sind, daß der Meßwert digital auf dem Filmrand aufgezeichnet wird (US-B-4053909, DE-B 3034161).

Der Öffnungswinkel der Kamera darf nicht zu groß sein. Die Kamera soll nämlich vor allem das Fahrzeugkennzeichen so aufnehmen, daß es deutlich erkennbar ist. Es muß also ein langbrennweitiges Objektiv mit einem entsprechend engen Gesichtsfeld verwendet werden. Das bringt gewisse Probleme mit sich:

Im allgemeinen ist das photographierte Fahrzeug nicht allein auf der Straße. Es sind andere Fahrzeuge vorhanden, die im allgemeinen mit anderen Geschwindigkeiten fahren. Es finden Überholvorgänge statt. Diese anderen Fahrzeuge können die Radarmessung erheblich stören. Sie können u.U. eine Überschreitung der Höchstgeschwindigkeit vortäuschen, die tatsächlich nicht gegeben ist oder jedenfalls nicht von dem Fahrer des photographierten Fahrzeugs begangen wurde. Die Beweiskraft von Radarmessung plus photographischer Aufnahme kann dadurch stark herabgesetzt werden. Das gilt insbesondere, wenn die Radarmessung nur eine Art "Momentaufnahme" macht, also die Geschwindigkeit nur innerhalb eines relativ kurzen Zeitraumes mißt.

Um diese Fehler wenigstens zu erkennen, wäre es erforderlich, ein größeres Gesichtsfeld zu photographieren. Es könnte dann erkannt werden, ob sich im Bereich des photographierten und mutmaßlich gemessenen Fahrzeugs noch andere, z.B. überholende, Fahrzeuge befanden, welche die Messung verfälscht haben könnten. Diese Forderung der Aufnahme eines größeren Gesichtsfeldes steht aber im Widerspruch zu der Forderung nach deutlicher Aufnahme des Fahrzeugkennzeichens. Die gleichzeitige Aufnahme mit zwei Kameras, von denen eine mit einem kurz- und die andere mit einem langbrennweitigen Objektiv arbeitet, erfordert erheblichen technischen Aufwand und verdoppelt den Filmverbrauch.

Ein anderer Weg, Fehlmessungen zu erkennen, die durch andere Fahrzeuge hervorgerufen werden, besteht darin, die durch Doppler- Radar gemessene Geschwindigkeit über einen möglichst langen Zeitraum hinweg zu verfolgen. Die Messung sollte also möglichst auf dem gesamten Meßabschnitt erfolgen, also so lange wie das Fahrzeug von dem Radarstrahl getroffen wird. Aus dem Signalverlauf über eine möglichst lange Zeit hinweg können dann eventuelle Störeinflüsse leichter erkannt werden.

Praktisch liefert jede Dopplerperiode einen Meßwert für die Geschwindigkeit des erfaßten Fahrzeugs. Es werden somit Folgen von einzelnen Meßwerten erhalten. Diese Meßwerte können infolge verschiedener Einflüsse sehr stark schwanken. Es ist ein Verfahren zur Bildung eines zu registrierenden Meßwertes aus diesen verschiedenen, schwankenden Meßwerten und zur Eliminierung von zweifelhaften Meßwerten bekannt. Bei diesem Verfahren werden die Meßwerte nach Geschwindigkeits- Klassen klassiert. Es wird also untersucht, wie oft ein Meßwert z.B. zwischen 40 km/h und 50 km/h liegt, wie oft zwischen 50 km/h und 60 km/h usw. Es ergibt sich so ein "Histogramm", also eine Darstellung der Anzahl der Geschwindigkeitsmessungen über dem Meßergebnis. Untersucht wird der Teil des Histogramms, der oberhalb eines bestimmten Häufigkeitsniveaus liegt. Bei einer sauberen Messung sollte ein Meßwert dominieren, also viele Messungen diesen Meßwert ergeben. Die Schwankungsbreite sollte gering sein. In diesem Falle wäre das Histogramm ein hoher, schmaler Peak. Sehr breite Histogramme oder Histogramme mit mehreren Peaks und Lücken dazwischen deuten auf Störungen. Im ersteren Falle wird der Wert der Geschwindigkeit, bei welchen der schmale, hohe Peak liegt, als anzuzeigender Meßwert angenommen. In den letzteren Fällen wird die Messung verworfen. Die Messung erfolgt bei dem bekannten Verfahren über den gesamten Meßabschnitt hinweg.

Bei dem bekannten Verfahren wird der abfließende Verkehr gemessen. Es bietet dann keine Probleme, nach der Durchführung und Auswertung der Messung, wenn das Fahrzeug mit seinem Heck den Radarstrahl verläßt, die photographische Aufnahme zu machen, wenn die Messung eine eindeutige Überschreitung der Höchstgeschwindigkeit ergibt. Das Heck des Fahrzeugs befindet sich dann an der Grenze des Radarstrahls bzw. des Meßabschnitts, die innerhalb des Gesichtsfeldes der Kamera liegt.

Es ist jedoch häufig erwünscht, den ankommenden Verkehr zu überwachen, also die Fahrzeuge die in Richtung auf die Verkehrsüberwachungsvorrichtung hin dem Radarstrahl entgegenfahren. Diese Notwendigkeit kann aus den praktischen Gegebenheiten resultieren. Die Überwachung des ankommenden Verkehrs bietet auch den Vorteil, das das Fahrzeug frontal photographiert werden kann. Es kann dabei bei Anwendung geeigneter Aufnahmetechniken nicht nur das Fahrzeugkennzeichen sondern auch der Fahrer identifiziert werden.

Wenn man aber den ankommenden Verkehr in der beschriebenen Weise überwachen will, dann ergeben sich Probleme mit der photographischen Aufnahme: Wenn das Fahrzeug den Meßabschnitt vollständig durchfahren hat, so daß sein Heck sich an der nun auf der Seite der Verkehrsüberwachungsvorrichtung liegenden Grenze des Meßabschnitts befindet, dann befindet sich wegen des engen Gesichtsfeldes der Kamera die Vorderseite des Fahrzeugs mit dem Fahrzeugkennzeichen in der Regel schon außerhalb des Gesichtsfeldes der Kamera. Das Fahrzeugkennzeichen könnte daher nicht mehr erfaßt werden.

Es ist daher bekannt, bei der Messung im ankommenden Verkehr den Meßwert für die Geschwindigkeit nur in einem engen Teil des an sich zur Verfügung stehenden Meßabschnitts durchzuführen und aufgrund dieser Messung die Kamera auszulösen, wenn der Meßwert den vorgegebenen Schwellwert überschreitet. Der mit dieser Messung gewonnene Meßwert wird dann auch registriert. Das bringt den schon oben erwähnten Nachteil mit sich, daß praktisch nur ein Momentanwert der mit dem Doppler- Radar gemessenen Geschwindigkeit erhalten wird, der keinen Rückschluß auf Störeinflüsse gestattet und dessen Zuverlässigkeit daher angezweifelt werden kann.

Es ist daher ein Verfahren zur photographischen Verkehrsüberwachung bekannt (EP-OS 0188694), bei welchem zwar die Auslösung der Kamera durch eine solche relativ kurzzeitige Geschwindigkeitsmessung gesteuert ist, so daß die Vorderseite des Fahrzeugs noch im Gesichtsfeld der Kamera erfaßt wird, und bei welchem auch der bei dieser kurzzeitigen Geschwindigkeitsmessung gewonnene Meßwert registriert wird, bei welchem aber anschließend eine "Verifizierung" dieses Meßwertes erfolgt. Es wird über den Rest des Meßabschnittes hinweg geprüft, ob die einlaufenden Geschwindigkeitsmeßwerte sich innerhalb einer vorgegebenen Bandbreite um den ersten, zu registrierenden Meßwert halten. Ist das nicht der Fall, wird dieser Meßwert nicht registriert, d.h. nicht in die schon gemachte Aufnahme eingespiegelt.

Auch bei diesem bekannten Verfahren wird der zu registrierende Meßwert für die Geschwindigkeit nur auf einem Teil des zur Verfügung stehenden Meßabschnitts gewonnen. Er ist daher, wie oben erläutert wurde, nicht vollständig zuverlässig. Die "Verifizierung" während des restlichen Teils des Meßabschnittes nimmt aber diesen nicht ganz zuverlässigen Meßwert als Referenz.

**Offenbarung der Erfindung**

Der Erfindung liegt die Aufgabe zugrunde, eine Verkehrsüberwachungsvorrichtung nach dem Oberbegriff des Patentanspruchs 1 so auszubilden, daß bei der Überwachung des ankommenden Verkehrs einerseits der gesamte zur Verfügung stehende Meßabschnitt für die Bildung des zu registrierenden Meßwertes ausgenutzt wird und andererseits eine sichere Erfassung des vorderen Fahrzeugkennzeichens mit der photographischen Aufnahme gewährleistet ist.

Erfindungsgemäß wird diese Aufgabe durch die im Kennzeichen des Patentanspruchs 1 aufgeführten Maßnahmen gelöst.

Nach der Erfindung werden somit zwei Messungen durchgeführt: Eine erste "Grobmessung" steuert lediglich die Kamera. Wenn der Verdacht besteht, daß das Fahrzeug die vorgegebene Höchstgeschwindigkeit überschreitet, wird es noch an einer Stelle photographiert, an welcher das vordere Fahrzeugkennzeichen für die Kamera deutlich sichtbar ist. Im Gegensatz zu den vorbekannten Verfahren und auch zu der EP-OS 0188694 wird dieser Meßwert jedoch nicht als Geschwindigkeit des Fahrzeugs registriert. Der Meßwert für die Geschwindigkeit des Fahrzeugs, der schließlich registriert wird, wird aus Messungen über den gesamten Meßabschnitt hinweg gewonnen. Aus diesen Messungen kann auf eventuelle Störeinflüsse geschlossen werden. Dieser Meßwert hat daher einen höheren Grad an Zuverlässigkeit als ein nur auf einem Teil des Meßabschnittes gewonnener Meßwert. Es wird nicht wie bei der EP-OS 0188694 ein Meßwert relativ geringer Zuverlässigkeit als Referenz für eine "Verifizierung" benutzt. Nur wenn der zweite Meßwert eindeutig eine Überschreitung der zulässigen Höchstgeschwindigkeit erkennen läßt, wird dieser Meßwert als Geschwindigkeit des Fahrzeugs registriert. Anderenfalls kann angezeigt werden, daß entweder eine Überschreitung der Höchstgeschwindigkeit nicht vorlag oder der Meßwert zweifelhaft ist.

Die Erfindung gestattet die Anwendung des oben geschilderten bekannten Verfahrens, bei welchem aus den über den Meßabschnitt hinweg erhaltenen Geschwindigkeitsmeßwerten ein Histogramm gebildet und ausgewertet wird. Wenn, wie z.B aus der DE-PS 3034161 bekannt ist, die Registrierung des Meßwertes der Geschwindigkeit auf dem Filmrand beim Filmtransport erfolgt, dann ist die Registrierung sowieso gegen die Aufnahme des Fahrzeugs verzögert. Es bietet dann keine Schwierigkeiten, diese Registrierung vom Ergebnis der über den gesamten Meßabschnitt hinweg erfolgenden Messung der Geschwindigkeit und der Auswertung dieser Messung abhängig zu machen.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

## Kurze Beschreibung der Zeichnungen

Fig.1 ist eine schematische Darstellung und veranschaulicht die Bewegung eines Fahrzeugs durch den Radarstrahl und das Gesichtsfeld der Kamera.

Fig.2 ist ein Blockschaltbild und veranschaulicht die Signalverarbeitung bei einer Verkehrsüberwachungsvorrichtung.

Fig.3 ist ein Flußdiagramm und veranschaulicht den Funktionsablauf.

Fig.4 zeigt einen typischen Verlauf der von dem Doppler-Radar erhaltenen Geschwindigkeitsmeßwerte.

Fig.5 zeigt ein aus den Geschwindigkeitsmeßwerten von Fig.4 gewonnenes Histogramm.

Fig.6 veranschaulicht die Auswertung der bei den Geschwindigkeitsmessungen über den Meßabschnitt hinweg erhaltenen Histogramme zur Unterscheidung zwischen auswertbaren und nicht- auswertbaren Messungen und zur Gewinnung des "zweiten" Meßwertes für die Geschwindigkeit des Fahrzeuges.

## Bevorzugte Ausführung der Erfindung

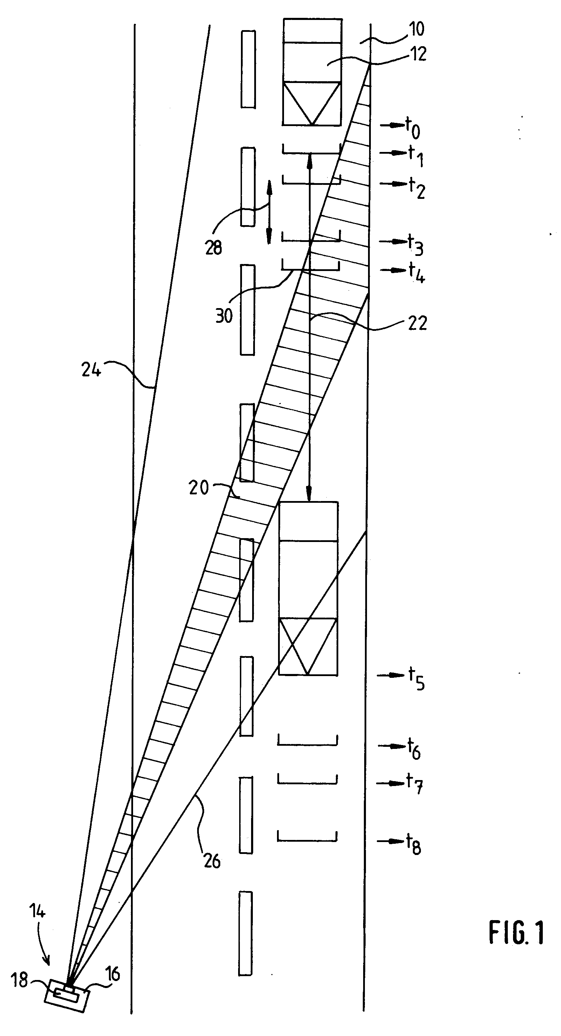

In Fig.1 ist mit 10 eine Fahrbahn bezeichnet. Ein Fahrzeug 12 fährt auf dieser Fahrbahn in Richtung von oben nach unten in Fig.1. Die Geschwindigkeit des Fahrzeuges wird mittels einer mit Doppler- Radar arbeitenden Verkehrsüberwachungsvorrichtung 14 überwacht. Die Verkehrsüberwachungsvorrichtung enthält ein Radargerät 16 und eine photographische Kamera 18. Das Radargerät 16 erzeugt einen divergierenden Radarstrahl 20. Der Radarstrahl 20 verläuft unter einem kleinen Winkel zur Fahrbahnlängsrichtung. Dadurch wird auf der Fahrbahn ein Meßabschnitt 22 definiert, in welchem ein Fahrzeug von dem Radarstrahl erfaßt wird. Die Kamera 18 hat einen Öffnungswinkel der durch die Randstrahlen 24 und 26 begrenzt ist. Dieser Öffnungswinkel enthält den Radarstrahl 20 und den Meßabschnitt 22. Die Kamera 18 ist mit einem relativ langbrennweitigen Objektiv versehen, so daß in einer Aufnahme des Fahrzeugs 12 das Fahrzeugkennzeichen deutlich erkennbar ist.

Die Verkehrsüberwachungsvorrichtung empfängt die an dem Fahrzeug 12 reflektierten Radarsignale und bildet daraus Geschwindigkeitsmeßwerte, welche die Geschwindigkeit des Fahrzeugs 12 wiedergeben sollen. Es wird dabei der Doppler-Effekt ausgenutzt, d.h. die Tatsache, daß sich die Frequenz der von einem bewegten Fahrzeug 12 reflektierten Radarstrahlung gegenüber der ausgesandten Strahlung verändert, und zwar um einen der Geschwindigkeit des Fahrzeuges proportionalen Betrag. Praktisch liefert dabei jede Dopplerperiode eine Geschwindigkeitsmessung, wenn die Periodendauer gemessen wird. Die Wirkungsweise eines Radargerätes zur Geschwindigkeitsmessung von Fahrzeugen ist eine bekannte Technik und daher hier nicht im einzelnen beschrieben.

Wenn die Messung der Geschwindigkeit mittels des Radargerätes einen Meßwert für die Geschwindigkeit ergibt, der über einer zulässigen Höchstgeschwindigkeit liegt, wird die Kamera 18 automatisch ausgelöst.

Bei der in Fig.1 dargestellten Verkehrsüberwachungseinrichtung wird der ankommende Verkehr überwacht. Das Fahrzeug 12 fährt auf die Verkehrsüberwachungsvorrichtung 14 zu, entgegen der Richtung des ausgesandten Radarstrahls 20. Es werden daher zwei Messungen der Geschwindigkeit durchgeführt, wobei jede dieser Messungen wieder aus einer Vielzahl von einzelnen Geschwindigkeitsmessungen abgeleitet ist. Eine erste Messung erfolgt auf einem einfahrtseitigen Teil 28 des Meßabschnitts 22. Eine zweite Messung erfolgt auf dem gesamten zur Verfügung stehenden Meßabschnitt 22 von dem Zeitpunkt $t_1$ an, wo das Fahrzeug 12 in den Radarstrahl 20 eintaucht, bis zu dem Zeitpunkt $t_5$, wo das Fahrzeug 12 den Radarstrahl wieder verläßt. In Fig.1 ist das Fahrzeug 12 einmal in einer Stellung gezeichnet kurz bevor es in den Radarstrahl eintaucht (Zeitpunkt $t_0$) und zum anderen in einer Stellung, in welcher es den Radarstrahl 20 wieder verläßt. Andere Stellungen des Fahrzeugs 12 sind nur angedeutet.

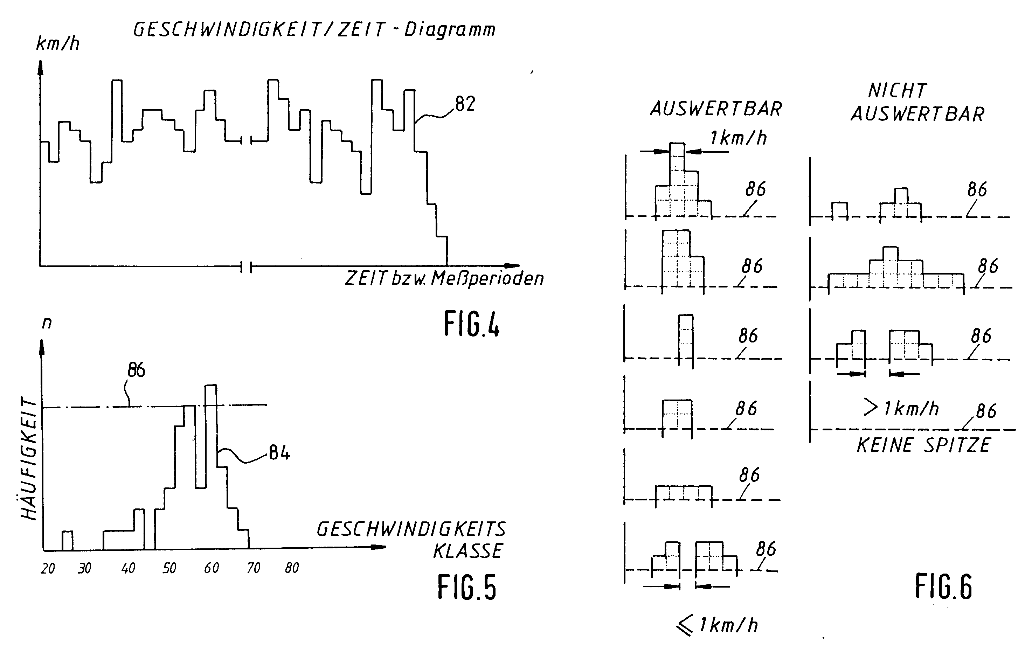

Im Zeitpunkt $t_2$ beginnt die Messung. Der Beginn der Messung ist durch die Bedingung festgelegt, daß vorher während dreier aufeinanderfolgender Dopplerperioden der reflektierten Radarstrahlung die aus der Periodendauer resultierenden Geschwindigkeitsmeßwerte sich um nicht mehr als 1 km/h unterscheiden. Zwischen dem Zeitpunkt $t_2$ und dem Zeitpunkt $t_3$ wird der erste Meßwert für die Geschwindigkeit gebildet. Die Zeitspanne zwischen dem Zeitpunkt $t_2$ und dem Zeitpunkt $t_3$ bildet den besagten einfahrtseitigen Teil 28 des Meßabschnitts 22. Zwischen dem Zeitpunkt $t_1$ bzw. praktisch dem Zeitpunkt $t_2$ und dem Zeitpunkt $t_5$, also während der gesamten Meßperiode wird weiterhin ein zweiter Meßwert für die Geschwindigkeit gebildet. Das wird weiter unten unter Bezugnahme auf Fig.4 bis 6 noch im einzelnen beschrieben.

Wenn der erste Meßwert im Zeitpunkt $t_3$ oberhalb eines vorgegebenen Schwellwertes liegt, der beispielsweise gleich der zulässigen Höchstgeschwindigkeit ist, dann wird im Zeitpunkt $t_4$ die Kamera 18 ausgelöst. Es wird in der Stellung 30 eine Aufnahme des Fahrzeugs 12 gemacht. Das Fahrzeug befindet sich dann mit seiner Vorderseite und dem vorderen Fahrzeugkennzeichen in der Mitte des Öffnungswinkels des Objektivs. Auf der Aufnahme ist daher das Fahrzeugkennzeichen deutlich erkennbar. Es ist bei Anwendung geeigneter Beleuchtungs- und Aufnahmetechniken auch möglich, den Fahrer des Fahrzeugs durch die Windschutzscheibe hindurch identifizierbar mit aufzunehmen.

Im Zeitpunkt $t_5$, wenn das Fahrzeug den Radarstrahl 20 verläßt, würde das vordere Fahrzeugkennzeichen von der Kamera 18 nicht mehr erfaßt. Eine Vergrößerung des Öffnungswinkels zwischen den Grenzstrahlen 24 und 26 würde ein kürzerbrennweitiges Objektiv bedingen und damit die Erkennbarkeit des Fahrzeugkennzeichens beeinträchtigen.

Der Zeitpunkt $t_6$ markiert das Ende der Messung. Das Ende der Messung ist definiert dadurch, daß während einer vorgegebenen Pausenzeit keine reflektierten Radarstrahlen empfangen werden. Im Zeitpunkt $t_7$ ist die Auswertung der Meßdaten beendet. Der Kameramotor wird gestartet, um den Filmtransport vorzunehmen. In Abhängigkeit von dem zweiten Meßwert, der über die gesamte Meßperiode 22 hinweg ermittelt wurde, wird dieser Meßwert während des Filmtransports auf dem Rand des Films registriert oder nicht. Das geschieht durch die in der DE-PS 3034161 beschriebene Einrichtung. Falls der Meßwert unterhalb des Schwellwertes liegt oder sich als nicht zuverlässig erwiesen hat, kann dies auch durch die gleiche Einrichtung auf dem Film vermerkt werden. Die beschriebene Registrierung ist zum Zeitpunkt $t_8$ beendet.

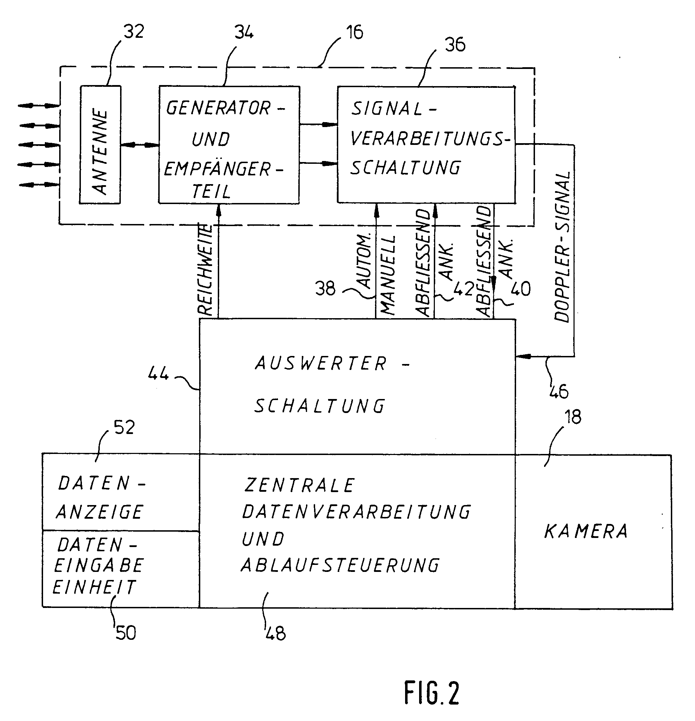

Fig.2 ist ein Blockschaltbild der Verkehrsüberwachungsvorrichtung 14. Die Verkehrsüberwachungsvorrichtung 14 enthält ein Radargerät 16. Das Radargerät 16 weist eine Antenne 32 auf. Die Antenne sendet den Radarstrahl 20 aus und empfängt gleichzeitig die an dem Fahrzeug 12 reflektierte Radarstrahlung. Die Antenne ist mit einem Generator- und Empfängerteil 34 verbunden. Der Generator- und Empfängerteil 34 erzeugt die Signale die auf die Antenne 32 für den ausgesandten Strahl gegeben werden und bereitet gleichzeitig die empfangenen Signale auf. Die so erhaltenen Signale werden in einer Signalverarbeitungsschaltung 36 digitalisiert. Aus dem Vorzeichen der Abweichung der Frequenz der reflektierten Radarstrahlung von der Frequenz der ausgesandten Radarstrahlung kann durch die Signalverarbeitungsschaltung die Bewegungsrichtung des erfaßten Fahrzeugs bestimmt werden. Wie durch den Eingang 38 angedeutet ist, kann die Signalverarbeitungsschaltung 36 wahlweise auf "Automatik" oder "Manuell" geschaltet werden. Im ersteren Fall bestimmt die Signalverarbeitungsschaltung selbst die Fahrtrichtung des beobachteten Fahrzeugs. Im zweiten Fall kann eine bestimmte Fahrtrichtung vorgegeben werden, und es werden dann nur Fahrzeuge dieser Fahrtrichtung berücksichtigt. Im ersteren Falle wird die gemessene Fahrtrichtung durch einen Ausgang 40 ausgegeben. Im letzteren Falle wird die gewünschte Fahrtrichtung durch einen Eingang 42 eingegeben.

Eine Auswerterschaltung 44 erhält über einen Eingang 46 die digitalisierten Geschwindigkeitsmeßwerte, die aus den Doppler- Signalen gebildet worden sind. Die Auswerterschaltung 44 erhält weiterhin Fahrtrichtungssignale vom Ausgang 40 der Signalverarbeitungsschaltung 36. In der Auswerterschaltung werden in noch zu beschreibender Weise der erste und der zweite Meßwert für die Geschwindigkeit des Fahrzeugs gebildet. Außerdem werden durch eine statistische Analyse der auftretenden Geschwindigkeitsmeßwerte, die je einer Dopplerperiode der Radarwellen entsprechen, Kriterien für die Zuverlässigkeit des zweiten Meßwertes gewonnen.

Die Signale von der Auswerterschaltung 44 werden einer zentralen Datenverarbeitung und Ablaufsteuerung 48 zugeführt. Die Datenverarbeitung und Ablaufsteuerung 48 steuert die Kamera 18 und die Registrierung des zweiten Meßwertes in der beschriebenen Weise. Mit 50 ist eine Dateneingabeeinheit bezeichnet. Weiterhin ist eine Datenanzeigevorrichtung 52 vorgesehen.

Die Wirkungsweise einer solchen Verkehrsüberwachungsvorrichtung ist prinzipiell bekannt. Daher sind die einzelnen Bauteile hier nicht im einzelnen beschrieben.

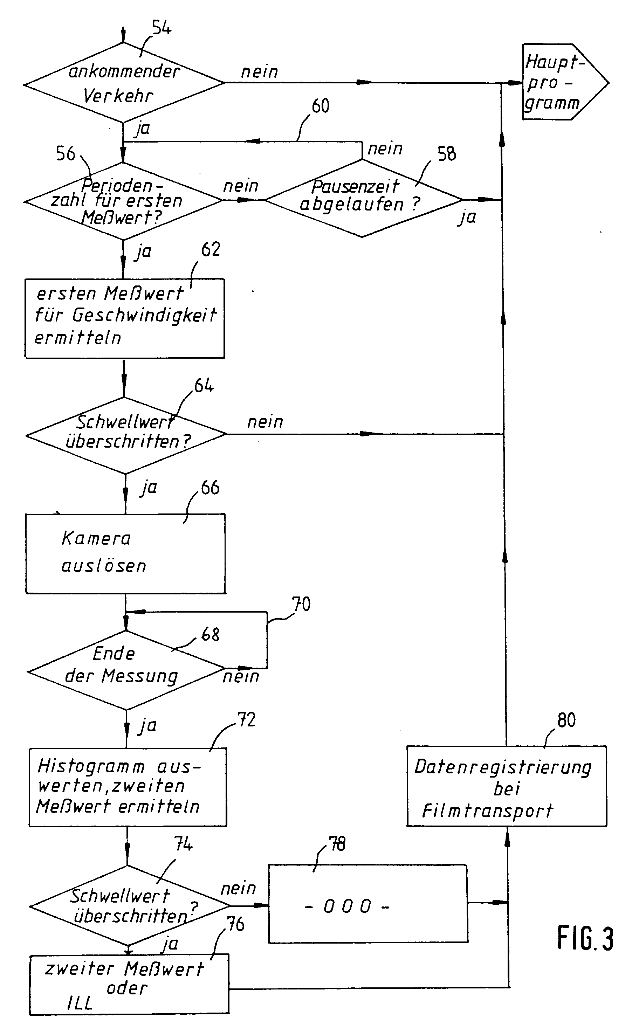

Fig.3 ist ein Flußdiagramm und veranschaulicht die Funktion der Verkehrsüberwachungsvorrichtung bei der Messung der Geschwindigkeit im ankommenden Verkehr.

Gemäß Rhombus 54 erfolgt zunächst eine Prüfung, ob eine Messung im ankommenden Verkehr erfolgt. Das ergibt sich entweder, wenn der Eingang 38 auf "Manuell" gestellt ist, aus dem Zustand des Eingangs 42 oder, wenn der Eingang 38 auf "Automatik" gestellt ist, aus dem Ausgang 40 der Signalverarbeitungsschaltung 36. Ist das Ergebnis der Prüfung negativ ("nein"), so deht die Verkehrsüberwachungsvorrichtung zu dem hier nicht interessierenden "Hauptprogramm" über. Ist das Ergebnis der Prüfung positiv ("ja"), so erfolgt gemäß Rhombus 56 eine Prüfung, ob die für den ersten Meßwert der Geschwindigkeit vorgesehene Anzahl von Dopplerperioden schon empfangen worden ist. Wenn dies nicht der Fall ist ("nein") erfolgt eine weitere, durch den Rhombus 58 symbolisierte Prüfung, ob eine vorgegebene Pausenzeit schon abgelaufen ist, während welcher keine Dopplerperioden empfangen wurden. Die gemäß Rhombus 58 geprüfte Pausenzeit stellt sicher, daß die Dopplerperioden nicht zu lange ausbleiben, d.h. die Messung aus einem Zug ohne wesentliche Unterbrechung besteht. Wenn diese Pausenzeit abgelaufen ist ("ja"), dann bedeutet dies den Abbruch der Messung. Die Verkehrsüberwachungsvorrichtung kehrt zum Hauptprogramm zurück. Ist die Pausenzeit noch nicht abgelaufen ("nein"), durchläuft das Programm eine Schleife 60 und wiederholt die Prüfung gemäß Rhombus 56. Die Schleife 60 wird solange durchlaufen, bis die für die Bestimmung des ersten Meßwertes erforderliche Anzahl von Dopplerperioden empfangen worden ist und damit eine entsprechende Anzahl von Geschwindigkeitsmeßwerten vorliegt. Das ist in Fig.1 der Zeitpunkt $t_3$ . Aus diesen momentanen Geschwindigkeitsmeßwerten wird durch die Auswerterschaltung der besagte erste Meßwert für die Geschwindigkeit gebildet. Das ist in dem Flußdiagramm durch einen Block 62 dargestellt.

Es erfolgt dann wieder eine Prüfung, ob ein vorgegebener Schwellwert der Geschwindigkeit überschritten ist oder nicht. Das ist durch einen Rhombus 64 dargestellt. Ist das Ergebnis der Prüfung negativ ("nein"), geht die Verkehrsüberwachungsvorrichtung wieder in das Hauptprogramm über. Ist das Ergebnis der Prüfung positiv, wird also der vorgegebene Schwellwert überschritten ("ja"), so erfolgt eine Auslösung der Kamera 18. Das ist in dem Flußdiagramm durch einen Block 66 dargestellt. An die Aufnahme schließt sich wieder eine Prüfung an, ob die Messung beendet ist oder nicht. Das ist durch einen Rhombus 68 dargestellt. Das Kriterium dafür ist wieder das Ausbleiben von Dopplerperioden für eine vorgegebene Pausenzeit. Das ist die oben erwähnte Pausenzeit zwischen den Zeitpunkten $t_5$ und $t_6$ von Fig.1. Ist das Ergebnis der Prüfung negativ ("nein"), wird eine Schleife 70 durchlaufen und die Prüfung wiederholt. Das geschieht so lange, bis das Ergebnis der Prüfung positiv wird, also für die vorgegebene Pausenzeit keine Dopplerperioden empfangen werden ("ja"). In diesem letzteren Falle wird die endgültige Auswertung der Geschwindigkeitssignale zur Bildung des besagten zweiten Meßwertes für die Geschwindigkeit des Fahrzeugs 12 eingeleitet. Diese Auswertung erfolgt durch die Auswerterschaltung 44 von Fig.2 in der im Zusammenhang mit Fig.4 bis 6 noch ,zu beschreibenden Weise. Die Auswertung umfaßt auch eine Prüfung der Verwertbarkeit des erhaltenen zweiten Meßwertes für die Geschwindigkeit aufgrund der unten noch beschriebenen Histogrammauswertung.. Die Bildung des zweiten Meßwertes für die Geschwindigkeit und die Auswertung der momentanen Geschwindigkeitsmeßwerte zur Prüfung der Verwertbarkeit dieses Meßwertes ist in dem Flußdiagramm von Fig.3 durch einen Block 72 dargestellt.

An die Bildung des zweiten, endgültigen Meßwertes für die Geschwindigkeit schließt sich wieder eine Prüfung an, ob der Meßwert einen vorgegebenen Schwellwert überschreitet oder nicht. Diese Prüfung ist in dem Flußdiagramm durch einen Rhombus 74 dargestellt. Ist das Ergebnis der Prüfung positiv ("ja"), ist also der vorgegebene Schwellwert überschritten, wird für die Registrierung auf dem Film entweder der ermittelte zweite Meßwert für die Geschwindigkeit vorbereitet, wenn die Messung bei der Auswertung gemäß Block 72 als verwertbar beurteilt wurde, oder es wird die Anzeige ILL ( = illegal) vorgesehen, wenn die Auswertung Zweifel an der Verwertbarkeit des Meßwertes ergab. Diese Vorbereitung und Speicherung des Meßwertes bzw. der Anzeige ILL ist durch einen Block 76 dargestellt. Ist das Ergebnis der Prüfung negativ, ergibt also die endgültige Auswertung, daß tatsächlich keine Überschreitung des Schwellwertes vorlag, dann wird für die Registrierung die Anzeige "000" vorbereitet. Das ist in dem Flußdiagramm durch einen Block 78 dargestellt. Wenn dann im Zeitpunkt $t_7$ der Filmtransport beginnt, dann werden nach dem Verfahren der DE-PS 3034161 die vorbereiteten Daten abgerufen und während des Filmtransportes auf dem Filmrand registriert. Das ist in dem Flußdiagramm durch einen Block 80 dargestellt. Anschließend kehrt die Verkehrsüberwachungsvorrichtung wieder in das Hauptprogramm zurück.

In Fig.4 bis 6 ist schematisch an einem Beispiel die Auswertung der Geschwindigkeitssignale zur Bestimmung des zweiten Meßwertes und zur Gewinnung von Kriterien für die Verwertbarkeit dieses Meßwertes dargestellt. Diese Art der Bildung des Meßwertes und der Auswertung ist, wie oben schon erwähnt wurde, an sich bekannt. Sie ist aber bei der beschriebenen Verkehrsüberwachungsvorrichtung auch für die Überwachung des ankommenden Verkehrs anwendbar.

Mit 82 in Fig.4 ist ein Signalverlauf bezeichnet, wie er sich aus den aufeinanderfolgenden, jeweils einer Dopplerperiode entsprechenden momentanen Geschwindigkeitsmeßwerten ergibt. Der Signalverlauf zeigt also die gemessene Geschwindigkeit als Funktion der Zeit.

Gemäß Fig.5 ist aus diesen Geschwindigkeitsmeßwerten ein "Histogramm" 84 gebildet. Die Geschwindigkeitsmeßwerte sind in Geschwindigkeitsklassen klassiert. Als Abszisse sind Geschwindigkeiten aufgetragen. Als Ordinaten erscheinen Häufigkeiten. Es ist also beispielsweise aufgetragen, wie häufig bei den Geschwindigkeitsmeßwerten gemäß Fig.4 ein Wert zwischen 40 km/h und 41 km/h oder zwischen 41 km/h und 42 km/h auftrat usw. Es wird nun ein Häufigkeitsniveau $n_G$ vorgegeben. Dieses Häufigkeitsniveau definiert eine Grenzlinie 86. Untersucht werden die Teile des Histogramms, die oberhalb dieser Grenzlinie 86 liegen. Daraus wird sowohl der zweite Meßwert für die Geschwindigkeit gewonnen wie auch ein Kriterium für die Zuverlässigkeit des Meßwertes. Das wird nachstehend anhand von Fig.6 erläutert.

In der linken Spalte von Fig.6 sind Fälle gezeigt, in denen die aus den Radarsignalen gebildeten Geschwindigkeitsmeßwerte die Bildung eines verwertbaren Meßwertes für die Geschwindigkeit des Fahrzeugs 12 liefern. Es tritt oberhalb der Grenzlinie 86 nur entweder eine Spitze auf oder es werden zwei dicht benachbarte Spitzen erhalten. Die Breite der Spitzen überschreitet ein gewisses Maß nicht. Das bedeutet, daß der Meßwert auf vielen einzelnen Geschwindigkeitsmeßwerten beruht, die alle relativ dicht beieinanderliegen. Dieser Meßwert ist also zuverlässig. Es sind keine stark davon abweichenden Meßwerte erkennbar. In der rechten Spalte sind dagegen Fälle gezeigt, die keine zuverlässige Bildung eines Meßwertes gestatten. Es sind mehrere Peaks vorhanden, was auf ein zweites, mit anderer Geschwindigkeit fahrendes Fahrzeug hindeutet, oder der Peak ist sehr breit. Letzteres bedeutet, daß die Geschwindigkeitsmeßwerte stark streuen. In dem in der dritten Zeile der rechten Spalte dargestellten Fall ist ein breiter Einbruch erkennbar, der ebenfalls auf zwei unterschiedlich schnelle Fahrzeuge hindeutet. Die letzte Zeile der rechten Spalte zeigt überhaupt keine über die Grenzlinie hinausgehende Spitze. In allen diesen Fällen wird die Registrierung der Geschwindigkeit während des Filmtransports verhindert und stattdessen die Angabe ILL ausgegeben.

Die Gesamtzahl der von Beginn bis Ende der Messung erhaltenen Geschwindigkeitsmeßwerte, also praktisch das Integral des Histogramms über die Geschwindigkeit oder die Häufigkeitssumme liefert ein Kriterium für die Größe des Fahrzeuges. Es kann dadurch zwischen einem Personenkraftwagen und einem Lastkraftwagen unterschieden werden. Die Grenzlinie 86 wird dementsprechend verändert: Für einen Lastkraftwagen, der während der Meßzeit mehr Geschwindigkeitsmeßwerte liefert als ein Personenkraftwagen muß die Grenzlinie 86 gegenüber der für einen Personenkraftwagen geltenden Grenzlinie angehoben werden.

Wenn auf Grund des Histogramms zwischen einem Personenkraftwagen und einem Lastkraftwagen unterschieden werden kann, dann können für diese beiden Fahrzeugtypen auch unterschiedliche Schwellwerte für die Meßwerte der Geschwindigkeit vorgegeben werden, wenn für Lastkraftwagen ein niedrigerer Wert der zulässigen Höchstgeschwindigkeit gilt als für Personenkraftwagen. Die Auswertung der Geschwindigkeitsmeßwerte gemäß Block 72 von Fig. 3 kann eine Integration des Histogramms über die Geschwindigkeit umfassen, um ein Kriterium für die Fahrzeugart (PKW oder LKW) zu gewinnen. Dementsprechend kann dann für die Prüfung gemäß Rhombus 74 von Fig.3 ein für Personenkraftwagen vorgegebener höherer oder ein für Lastkraftwagen vorgegebener niedrigerer Schwellwert zugrundegelegt werden, je nachdem, welche Fahrzeugart die Auswertung nach Block 72 anzeigt.

Es kann sein, daß die Häufigkeitssumme einen zweiten, oberen Grenzwert überschreitet, der oberhalb der Häufigkeitssummen liegt, welche selbst durch sehr lange Lastkraftwagen hervorgerufen werden können. Das ist der Fall, wenn eine Kolonne von Fahrzeugen in mit geringen Abständen durch den Radarstrahl fährt. Der Radarstrahl erfaßt dann ständig wenigstens zwei Fahrzeuge, so daß praktisch keine Pause zwischen den Dopplersignalen auftritt. Auch in diesem Fall wird bei der Auswertung gemäß Block 72 eine Anzeige eines Meßwertes für die Geschwindigkeit verhindert. Es kann eine Markierung, z.B. "0---", zur Kennzeichnung einer solchen Kolonnensituation vorgesehen werden.

**Patentansprüche**

1. Verkehrsüberwachungsvorrichtung zur photographischen Registrierung von Fahrzeugen, die eine vorgegebene Geschwindigkeit überschreiten, bei welcher die Geschwindigkeit der Fahrzeuge durch Doppler- Radar im wesentlichen gegen die Fahrtrichtung gemessen wird und die Fahrzeuge frontal photographiert werden, enthaltend
    (a) einen Radarsender (16), der einen divergierenden Radarstrahl (20) unter einem kleinen Winkel zur Fahrbahnlängsrichtung aussendet, so daß auf der Fahrbahn (10) ein Meßabschnitt (22) definiert ist, in welchem ein Fahrzeug (12) von dem Radarstrahl (20) erfaßt wird,
    (b) eine Kamera (19) mit einem den Meßabschnitt (22) enthaltenden Öffnungswinkel, durch welche ein Bild eines Fahrzeugs (12) in einer ein Erkennen des Fahrzeugkennzeichens zulassenden Weise erzeugbar ist,
    (c) Mittel zur Bildung eines Meßwertes für die Geschwindigkeit eines Fahrzeuges aus den an dem Fahrzeug reflektierten Radarsignalen auf einem einfahrtseitigen Teil (28) des Meßabschnitts (22),
    (d) Mittel zur Auslösung der Kamera, wenn der besagte Meßwert einen vorgegebenen Schwellwert überschreitet, und
    (e) geschwindigkeitsregistrierende Mittel **dadurch gekennzeichnet daß**
    (f) Mittel vorgesehen sind zur Bildung eines zweiten Meßwertes für die Geschwindigkeit des Fahrzeuges (12) aus einer Vielzahl von Geschwindigkeitsmeßwerten, die über den gesamten Meßabschnitt (22) hinweg aus den an dem Fahrzeug (12) reflektierten Radarsignalen gewonnen werden, und
    (g) die geschwindigkeitsregistrierenden Mittel von dem zweiten Meßwert für die Geschwindigkeit beaufschlagt sind.

2. Vorrichtung nach Anspruch 1, dadurch gekennzeichnet, daß
    (a) die Kamera (18) eine photographische Kamera mit einem bildweise transportierbaren Film ist,
    (b) die geschwindigkeitsregistrierenden Mittel eine Anordnung von Leuchtdioden enthalten, die im Bereich des Filmrandes angeordnet und während des Filmtransports von Speichermitteln, in denen der besagte zweite Meßwert für die Geschwindigkeit gespeichert ist, so ansteuerbar sind, daß der besagte zweite Meßwert digital auf dem Filmrand aufgezeichnet wird
    (c) die geschwindigkeitsregistrierenden Mittel zur Registrierung einer Geschwindigkeit nur ansteuerbar sind, wenn der besagte zweite Meßwert einen vorgegebenen Schwellwert überschreitet.

3. Vorrichtung nach Anspruch 1, **dadurch gekennzeichnet, daß**
    (a) Mittel vorgesehen sind zur Bildung eines Histogramms (84) aus der besagten Vielzahl von Geschwindigkeitsmeßwerten sowie
    (b) Mittel zur Vorgabe eines Häufigkeitsniveaus (86) und
    (c) Mittel zur Analyse der Struktur der das vorgegebene Häufigkeitsniveau (86) überschreitenden Teile des Histogramms (84) zwecks Unterscheidung zwischen auswertbaren und nicht- auswertbaren Messungen.

4. Vorrichtung nach Anspruch 3, **dadurch gekennzeichnet, daß**
    (a) Mittel zur Summation aller Häufigkeiten des Histogramms (84) zur Bildung einer Häufigkeitssumme vorgesehen sind,
    (b) ein Grenzwert für die Häufigkeitssumme vorgegeben ist, wobei Häufigkeitssummen unterhalb des Grenzwertes einer ersten Art von Fahrzeugen (PKW) und Häufigkeitssummen oberhalb des Grenzwertes einer zweiten Art von Fahrzeugen (LKW) zugeordnet sind,
    (c) bei einer Häufigkeitssumme unterhalb des Grenzwertes ein erster Schwellwert für die Meßwerte der Geschwindigkeit vorgegeben ist und bei einer Häufigkeitssumme oberhalb des Grenzwertes ein zweiter Schwellwert für die Meßwerte der Geschwindigkeit vorgegeben ist.

5. Vorrichtung nach Anspruch 4, **dadurch gekennzeichnet, daß** ein zweiter, oberer Grenzwert für die Häufigkeitssumme vorgegeben ist, wobei Häufigkeitssummen oberhalb dieses oberen Grenzwertes einer Fahrzeugkolonne zugeordnet werden und ein dabei erhaltener Meßwert für die Geschwindigkeit nicht verwertet wird.

## Claims

1. Traffic monitoring device for photographic recording of vehicles exceeding a predetermined speed, wherein the speed of the vehicles is measured by Doppler radar substantially against the travelling direction and the vehicles are photographed frontally, containing:

    (a) a radar transmitter (16), which emits a divergent radar beam (20) at a small angle to the longitudinal direction of the road such that a measuring section (22) in which a vehicle (12) is detected by the radar beam (20), is defined on the road,

    (b) a camera (18) which has an aperture angle covering the measuring section (22) and by means of which a picture of a vehicle (12) is produceable in a manner permitting identification of the license number of the vehicle,

    (c) means for forming a measuring value of the speed of a vehicle from the radar signals reflected at the vehicle in a portion (28) on the entry side of the measuring section (22),

    (d) means for actuating the camera when said measuring value exceeds a predetermined threshold value, and

    (e) speed recording means

    **characterised in that**

    (f) means are provided for forming a second measuring value of the speed of the vehicle (12) from a plurality of speed measuring values which are obtained over the total measuring section (22) from the radar signals reflected at the vehicle (12), and

    (g) the second measuring value of the speed is applied to the speed recording means.

2. Device according to claim 1, **characterised in that**

    (a) the camera is a photographic camera having a film feedable picture by picture,

    (b) the speed recording means contain an arrangement of light emitting diodes which are disposed in the area of the film rim and controllable during film transport by memory means in which said second measuring value of the speed is stored, such that said second measuring value is digitally recorded on the film rim,

    (c) the speed recording means for recording a speed are adapted to be energized only if said second measuring value exceeds a predetermined threshold value.

3. Device according to claim 1, **characterised in that**

    (a) means are provided for forming a histogram (84) from said plurality of speed measuring values as well as

    (b) means for establishing a frequency level (86) and

    (c) means for analysing the structure of those histogram (84) portions which exceed the predetermined frequency level (86), for differentiating between evaluateable and non-evaluateable measurements.

4. Device according to claim 3, **characterised in that**

    (a) means are provided for summing all frequencies of the histogram (84) for forming a frequency sum,

    (b) a limiting value is predetermined for the frequency sum, frequency sums below the limiting value being associa-ted with a first type of vehicles (passenger car) and frequency sums above the limiting value being associa-ted with a second type of vehicles (motor lorry),

    (c) a first threshold value for the measuring values of the speed is predetermined with a frequency sum below the limiting value and a second threshold value for the measuring values of the speed is predetermined with a frequency sum above the limiting value.

5. Device according to claim 4, **characterised in that** a second, upper limiting value is predetermined for the frequency sum, frequency sums above this upper limiting value being associated with a vehicle convoy and a thus obtained measuring value of the speed being not evaluated.

## Revendications

1. Dispositif de surveillance de trafic destiné à enregistrer photographiquement des véhicules dépassant une vitesse prédéterminée, dans lequel la vitesse du véhicule est mesurée par un radar Doppler généralement contre la direction de roulement, et une photo frontale des véhicules est prise, comprenant

    (a) un émetteur radar (16) émettant un rayon radar (20) divergant sous un petit angle à la direction longitudinale de la chaussée de sorte que sur la chaussée (10) est définie une section de mesure (22) dans laquelle un véhicule (12) est détecté par la rayon radar (20),

(b) une caméra (18) avec un angle d'ouverture comprenant la section de mesure (22), par laquelle une image d'un véhicule (12) peut être produite de sorte que la plaque d'immatriculation peut être reconnue,

(c) des moyens destinés à former une valeur de mesure pour la vitesse d'un véhicule à partir des signaux de radar reflétés au véhicule sur une partie (28) du côté entrée de la section de mesure (22),

(d) des moyens destinés à déclencher la caméra lorsque ladite valeur de mesure dépasse une valeur seuil prédéterminée, et

(e) des moyens enregistrant la vitesse,

**caractérisé par le fait que**

(f) des moyens sont prévus, destinés à former une seconde valeur seuil pour la vitesse du véhicule (12) à partir d'une multitude de valeurs de mesure de vitesse obtenues des signaux de radar refléctés au véhicule (12) sur toute la section de mesure (22), et

(g) la seconde valeur de mesure pour la vitesse est appliquée aux moyens enregistrant la vitesse.

2. Dispositif selon la revendication 1, caractérisé par le fait que

(a) la caméra (18) est une caméra photographique avec un film transportable par image,

(b) les moyens enregistrant la vitesse comprennent une disposition de diodes lumineuses disposées dans la zone du bord de film et commandables lors du transport de film par des moyens de mémoire dans lesquels ladite seconde valeur de mesure pour la vitesse est mémorisée, de sorte que ladite seconde valeur de mesure est digitalement enregistrée sur le bord du film,

(c) les moyens enregistrant la vitesse destinés à enregistrer une vitesse ne sont commandables que lorsque ladite seconde valeur seuil prédéterminée dépasse une valeur seuil prédéterminée.

3. Dispositif selon la revendication 1, **caractérisé par le fait que**

(a) sont prévus des moyens qui sont destinés à former un histogramme (84) à partir de la multitude de valeurs de mesure de vitesse ainsi que

(b) des moyens destinés à prédéterminer un niveau de fréquence (86), et

(c) des moyens destinés à l'analyse de la structure des parts de l'histogramme (84) dépassant le niveau de fréquence (86) afin de différencier entre des mesurages évaluables et non-évaluables.

4. Dispositif selon la revendication 3, **caractérisé par le fait que**

(a) des moyens sont prévus, qui sont destinés à la sommation de toutes les fréquences de l'histogramme afin de former une somme de fréquences,

(b) une valeur limite pour la somme de fréquences est prédéterminée, des sommes de fréquences au dessous de la valeur limite étant associées à un premier type de véhicule (voiture particulière) et des sommes de fréquences au dessus de la valeur limite étant associées à un second type de véhicule (poids lourd),

(c) en cas d'une somme de fréquences au dessous de la valeur limite, une première valeur seuil est prédéterminée pour les valeurs de mesure de la vitesse, et en cas d'une somme de fréquences au dessus de valeur limite, une seconde valeur seuil est prédéterminée pour les valeurs de mesure de la vitesse.

5. Dispositif selon la revendication 4, **caractérisé par le fait qu'**une seconde valeur limite supérieure est prédéterminée pour la somme de fréquences, des sommes de fréquences au dessus de cette valeur limite supérieure étant associées à une colonne de véhicules et une valeur de mesure alors obtenue pour la vitesse n'étant pas utilisée.

FIG.1

FIG.2

54

ankommender
Verkehr

nein

60

nein

58

Hauptprogramm

56

Periodenzahl für ersten
Meßwert?

nein

Pausenzeit
abgelaufen ?

ja

ja

62

ersten Meßwert
für Geschwindigkeit
ermitteln

64

Schwellwert
überschritten?

nein

ja

66

Kamera
auslösen

70

68

Ende
der Messung

nein

ja

72

Histogramm auswerten, zweiten
Meßwert ermitteln

80

Datenregistrierung
bei
Filmtransport

74

78

Schwellwert
überschritten?

nein

- 0 0 0 -

ja

76

zweiter Meßwert
oder
ILL

FIG. 3

13

GESCHWINDIGKEIT / ZEIT - Diagramm

km/h

82

ZEIT bzw. Meßperioden

FIG.4

n

86

HÄUFIGKEIT

84

GESCHWINDIGKEITS
KLASSE

20   30   40   50   60   70   80

FIG.5

AUSWERTBAR

1km/h

86

86

86

86

86

86

≤ 1 km/h

NICHT
AUSWERTBAR

86

86

86

> 1km/h        86

KEINE SPITZE

FIG.6

14

EP 0 286 910 B1